Europäisches Patentamt

European Patent Office

Office européen des brevets

(11) Publication number: **0 018 233**
A1

(12) **EUROPEAN PATENT APPLICATION**

(21) Application number: **80301297.0**

(22) Date of filing: **23.04.80**

(51) Int. Cl.³: **D 06 N 7/00**, D 06 N 3/00,
A 47 G 27/02, B 05 D 1/26,
B 29 D 27/02, B 29 F 3/00
// C08L23/12

(30) Priority: **24.04.79 GB 7914178**

(43) Date of publication of application: **29.10.80**
**Bulletin 80/22**

(84) Designated Contracting States: **BE DE FR IT NL**

(71) Applicant: **PLASTICISERS ENGINEERING LIMITED,
Drighlington Near Bradford, BD11 1BY (GB)**

(72) Inventor: **Slack, Ian David, The Old Vicarage
Drighlington, Bradford BD11 1LS (GB)**

(74) Representative: **Stringer, David Hiram et al, W.P.
THOMPSON & CO Coopers Building Church Street,
Liverpool L1 3AB (GB)**

(54) **Fire resistant carpets.**

㊞ The present specification relates to a fire resistant carpet and methods of making them. The use of synthetic fibre in carpet poses a serious hazard in the spread of fire. The present invention provides for a carpet having a backing made of a plastics material which incorporates a flame retardant material. Additionally a foaming agent and/or filler may be incorporated in the plastics coating to provide a resilient backing and/or weight, respectively.
To construct such a carpet the plastics material coating is extruded onto the back of the carpet, the plastics material being drawn against and thus bonded to the carpet as the carpet is passed over suction means.

EP 0 018 233 A1

ACTORUM AG

1

## DESCRIPTION

## "Fire Resistant Carpets"

The present invention relates to fire resistant carpets and method of making such carpets.

Carpets manufactured from synthetic fibre have the one problem of flammability. The use of synthetic fibre in carpet poses a serious hazard in the spread of fire in homes, offices, etc., and there is a safety requirement in the United Kingdom that a fire on a carpet should be self extinguishing once the source of heat has been removed.

Several flame retardants are commercially available which can be introduced into the polymer at the time of spinning into fibres but all of the commercial products so far available have given undesirable side properties to the fibre itself which make it unsuitable for use in carpets. For example, some flame retardant additives give the fibre a tacky surface so that the carpets soil easily and are almost impossible to clean. Other additives produce a brittle effect in the fibres and this causes the fibres to break off and make the carpet go prematurely bald.

The present invention seeks to provide a carpet wherein the above fire risk is reduced without detriment to the life and condition of the carpet.

According to the present invention there is provided a carpet, the back of which is provided with a coating of a plastics material, the plastics coating incorporating a flame retardant material.

Thus it is envisaged that in the event of a fire the plastics coating will melt releasing the flame retardant material e.g. antimony oxide, the fire being extinguished if the source of heat is removed.

Preferably the plastics coating is a polymer with an equal or lower melting point to that of the pile

2

fibres in the carpet. Also the plastics coating on the back of the carpet preferably has a concentration of flame retardant material sufficient so that when added to the weight of the synthetic pile fibre, there is an adequate amount of the flame retardant to make the carpet self-extinguishing.

A carpet constructed according to the present invention may be manufactured in any suitable manner, the plastics coating being added to the woven fibres. Preferably the plastics coating incorporating the flame retardant, is extruded onto the back of the carpet using the apparatus disclosed in our British Patent Application No. 39908/78, wherein molten plastics material is extruded onto the carpet back as the carpet is moved past an extrusion head, suction means beneath the path of the carpet drawing the plastics material against and into the carpet weave. The fibres of the carpet are thus actually bonded into the plastics coating material and heat is conducted, in the event of fire, from the fibres into the coating, thereby ensuring that the backing material will melt along with the pile fibres, thereby ensuring the release of the flame retardant chemicals from the coating.

In the manufacture of some carpets, it is customary to put a secondary backing on the carpet and this can be in the form of natural materials such as jute woven into a canvas-like back or alternatively the canvas-like material may be woven from synthetic fibres. The same fire hazard as referred to hereabove, also applies equally to the secondary backing and the addition of flame retardants to the synthetic fibre of the secondary backing also produces the detrimental effects of brittle fibres and easy soiling. To overcome these problems the plastics coating of the present invention, including a flame retardant, is applied to the secondary backing of the carpet. Preferably the secondary backing is applied simultaneously with the flame retardant plastics coating, thereby ensuring a satisfactory bond with the carpet and the backing.

It is further envisaged that a foaming agent could be added to the flame retardant plastics coating of the present invention, to thereby produce a carpet with a resilient back. Again this could be used either on its own or with carpets manufactured with a secondary backing.

Further, besides using a flame retardant additive, either alone or with a foaming agent, a filler may also be used in the plastics material. The purpose of the filler can be three-fold. One, it can simply cheapen the product by adding a quantity of organic or inorganic material to replace some of the polymer content. Two, a filler with a high thermal conductivity, which again could be either organic or inorganic, can be added, the purpose of which is to offset the low thermal conductivity of most plastic materials. In the event of a fire on the surface of the carpet, the heat would then be more quickly conducted away into the fire retardant material, thereby activating the flame retardant. Three, to simply add weight to the carpet, this being a significant factor with the usual light construction of carpets made with synthetic fibres, as these carpets tend to move about on the floor and form creases. All of these three properties could, of course, be imparted by one or a mixture of fillers.

EXAMPLE 1

The basic carpet used consisted of:-

Bulked continuous filament nylon of 2700 denier, tufted on a $\frac{5"}{32}$ pitch machine, with a $\frac{1"}{8}$ pile height, onto woven polypropylene tape carpet backing. The carpet was in the ex-loom state and had not been further processed in any way.

The back of the carpet was coated with a plastics material by means of a plastic coating machine comprising a 4½" extruder, 88" wide plastic sheet die and a vacuum coating device generally as described in British Patent Application No. 39909/79. The carpet was fed into the coating machine at a linear speed of 20 feet per minute and was passed, pile downwards, underneath the extrusion die where the plastic coating was applied. The plastic coating was drawn onto the back of the carpet by means of the vacuum box and finally the carpet was passed around a water-cooled drum so that the plastic coating was in contact with the surface of the drum, thereby causing the plastic to solidify.

The plastic coating consisted of a mixture of:-

(i) 95% by weight of Alkathene 22, which is an I.C.I. grade of low density polyethylene with an indicated melt flow index of 70; and

(ii) 5% by weight of Sandoflam 5070 which is a proprietory brand of flame retardant manufactured by Sandoz Ltd. Sandoflam 5070 is a masterbatch consisting of:- 65% by weight of active flame retardant disposed in 35% by weight of low density polyethylene. The composition of the active substance contains 32.3% bromine, 1% phosphorous and 1.5% tin.

The plastic coating material was formed by tumble mixing 95 k.g.s. of I.C.I. Alkathene 22 with 5 k.g. of Sandoflam 5070 in a rotating drum for 5 minutes, the resultant mixture being fed directly into the hopper of the extruder.

The extruder was a 4½", 28:1 single screw extruder with a feed screw comprising 13 flights, a compression section of 14 flights and a metering section of 12

5

flights. The depth of the metering section was 0.18" and the compression ratio of the feed screw was 3.5:1.

The extruder temperature was controlled in five equal zones with a set temperature gradient of 120°C-140°C-160°C-180°C-180°C.

The extrusion die consisted of a standard coat hanger flat film die with a flexible lip die adjustment. The die gap was set at 0.016" and the extruder was operated at a screw speed of 50 r.p.m. with the die at 180°C.

As the carpet was passed underneath the die and over the vacuum coating unit, the fan creating the vacuum was adjusted to provide a suction of 10" water gauge pressure.

After coating the carpet was weighed and found to have an average of 12 ounces per square yard of coating on the back of the carpet.

The carpet coated by this process with the above plastics material was then subjected to the standard 'pill' test i.e. as set down by the American Society for testing materials D2859-76 - flammability of finished textile floor coverings. It was observed that initially the nylon pile ignited but as soon as a molten pool of plastic was formed when the plastic backing on the carpet started to melt, the flame in the carpet itself was extinguished although the pill continued to burn.

EXAMPLE 2:-

This was essentially the same as example 1 except that the plastics material contained a foaming agent to provide a foamed backing on the carpet.

The plastics material consisted of:-
(i)   94½% by weight of Alkathene 22,
(ii)  5% by weight of Sandoflam 5070; and
(iii) ½% by weight of Celogen AZ130.

6

Celogen AZ130 is a proprietory foaming agent manufactured by Uniroyal, which decomposes between 205°C and 215°C to produce gas comprising 65% Nitrogen, 24% Carbon monoxide, 5% Carbon dioxide and 5% ammonia, the active solid constituents being Urazol, biurea, cyanelide and cyanuric acid. 220 ccs of non condensible gas are produced per gram of Celogen.

In operation the extruder temperature gradient was 160°C-180°C-200°C-220°C-220°C with the die at 220°C.

EXAMPLE 3:-

This again was essentially the same as example 1 except that the plastics material contained a filler to add weight and substance to the carpet.

The plastics material consisted of:-

(i) 65% by weight of Alkathene 22,

(ii) 5% Sandoflam 5070, and

(iii) 30% by weight of calcium carbonate filler.

In operation the extruder temperature gradient was 140°C-160°C-180°C-200°C-200°C.

1

## CLAIMS

1. A carpet having a back, characterised by a coating of a plastics material which is provided on the back, the plastics coating incorporating a flame retardant material.

2. A carpet according to claim 1, characterised in that the flame retardant material is antimony oxide.

3. A carpet according to claim 1 or claim 2, characterised in that the plastics coating is formed from a polymer having a melting point which is equal to or lower than the melting point of fibres which form the carpet pile.

4. A carpet according to any one of claims 1 to 3, characterised in that the plastics coating has a concentration of flame retardant material sufficient to make the carpet self-extinguishing.

5. A carpet according to any one of the preceding claims, characterised in that a foaming agent is incorporated in the flame retardant plastics coating.

6. A carpet according to any one of the preceding claims, characterised in that one or more filler materials are incorporated in the plastics material coating.

7. A carpet according to claim 6, characterised in that the filler material has a high thermal conductivity relative to the thermal conductivity of the plastics coating.

8. A carpet according to any one of the preceding claims, characterised in that a secondary backing is provided on the carpet over the plastics coating.

9. A carpet according to claim 8, characterised in that the secondary backing is made of a natural material.

10. A carpet according to claim 9, characterised in that the secondary backing is made of jute.

2

11. A method of manufacturing the carpet of claim 1, characterised in that a molten plastics layer incorporating a flame retardant material, is extruded onto a carpet layer which is pervious to air, the carpet being passed over suction means to draw the plastic into the carpet layer.

12. A method as claimed in claim 9, in which a secondary backing is subsequently secured over the plastics coating.

## DOCUMENTS CONSIDERED TO BE RELEVANT

| Category | Citation of document with indication, where appropriate, of relevant passages | Relevant to claim |
|---|---|---|
| X | US - A - 3 689 355 (HORNBAKER, SPARKS, ORLOFF) <br> * Whole document * <br> -- | 1,4, 6,7 |
| X | US - A - 3 661 691 (D.K. SLOSBERG) <br> * Table I, III and IV * <br> -- | 1,2, 4,5 |
| X | GB - A - 1 274 925 (BAYER) <br> * Page 1, lines 39-68 * <br> -- | 1-4 |
| X | US - A - 3 766 189 (E.A. BLACKFORD) <br> * Example 4 * <br> -- | 1,4 |
| X | CH - A - 371 775 (H. BOIVIN) <br> * Whole document * <br> -- | 1,2,5 |
|  | FR - A - 1 316 765 (BRITISH CELLO-PHANE) <br> * Page 1, right-hand column * <br> -- | 11 |
|  | DE - A - 1 560 722 (GUNDERN-HAUSEN) <br> * Example and claims * <br> -- | 1,3,6, 11 |
| P | EP - A - 0 009 993 (PLASTICISERS ENGINEERING) published 16-04-1980 | 1,11 |
| D | & GB - A - 39 909/78 <br> ./. <br> -- |  |

### CLASSIFICATION OF THE APPLICATION (Int. Cl)

```
D 06 N   7/00
             3/00
A 47 G  27/02
B 05 D   1/26
B 29 D  27/02
B 29 F   3/00 //
C 08 L  23/12
```

### TECHNICAL FIELDS SEARCHED (Int.Cl.)

```
D 06 N   7/00
B 05 D   1/26
B 29 D  27/02
B 29 F   3/00
D 06 N   3/00
B 05 D   1/00
D 06 M  11/00
A 47 G  27/02
C 08 L  23/12
C 09 D   3/00
```

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-07-1980 | COUCKUYT |

EPO Form 1503.1   06.78

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | FR - A - 2 359 874 (IDEMITSU KOSAN) <br> * Claims * | 1,2, 6,7 | |
| | FR - A - 2 343 015 (DYNAMIT NOBEL) <br> * Claims * | 1,2,4, 6 | |
| | FR - A - 2 175 122 (FARBWERKE HOECHST) <br> * Claims * | 1,2,4, 6 | |
| | | | **TECHNICAL FIELDS SEARCHED (Int. Cl. 3)** |

EPO Form 1503.2   06.78